# EUROPEAN PATENT SPECIFICATION

(11) **EP 4 499 463 B1**
(45) Date of publication and mention of the grant of the patent: **10.12.2025**
(21) Application number: 22720794.1
(22) Date of filing: 28.03.2022
(51) Int. Cl.: B60T 1/06, B60T 8/1755, B60T 8/1761, B60T 8/18, B60T 17/22, B60T 13/14, B60T 13/22, B60T 13/38

(54) **METHOD AND ARRANGEMENT FOR CALIBRATING A BRAKE OF A SPRING APPLIED BRAKE SYSTEM**
VERFAHREN UND ANORDNUNG ZUM KALIBRIEREN EINER BREMSE EINER FEDERSPEICHERBREMSANLAGE
PROCÉDÉ ET DISPOSITIF PERMETTANT D'ÉTALONNER UN FREIN D'UN SYSTÈME DE FREINAGE À RESSORT

(43) Date of publication of application: 05.02.2025
(73) Proprietor: Epiroc Rock Drills Aktiebolag, 701 91 Örebro (SE)
(72) Inventor: BAGGE, Markus, 701 91 Örebro (SE)
(74) Representative: Epiroc Rock Drills AB
(86) International application number: PCT/SE2022/050298
(87) International publication number: WO 2023/191668

(56) References cited:
- DE-A1- 102005 014 097
- US-A1- 2011 061 448
- US-A1- 2014 277 978
- US-A1- 2014 346 854

## Description

### Technical field

The present invention relates generally to a method and arrangement for calibrating a brake of a spring applied brake system. The present invention further relates to a mining, construction or excavation vehicle comprising a spring applied brake system, a drive means and such an arrangement.

### Background art

Spring applied brakes are designed to engage to drive means of a vehicle whenever energy is removed from the brakes. The term "spring applied brakes" comprises for example Spring Applied Hydraulic Released (SAHR) and Spring Applied Pneumatic Released (SAPR) brakes. In other words, without any energy supply to the brakes, such as hydraulic or pneumatic pressure, the brakes engage to the drive means and the vehicle is stopped or kept standing still. In more detail, the spring applied brakes rely on built-in springs pressing friction discs together in the absence of energy supply such as hydraulic or pneumatic pressure. Thereby, the spring applied brakes are inherently safe, and especially suited for heavy machinery world-wide.

However, in order to create a good operator feeling when activating the brakes, as well as a requested response with good reaction time, the brakes need to be calibrated, in other words, the pressure that is needed to release the brakes need to be determined.

Currently, this may be done in different ways. According to one method, the brakes may be calibrated using a preset pressure target value according to a brake data sheet. However, such brake data sheet pressure values will not take any brake production tolerances into account. Further, the pressure that is needed to release the brakes will decrease during the lifetime of the brakes due to wear.

According to another method, the machine is left standing on flat ground, a gear is engaged, brake pressure is gradually increased and the brake pressure at which a wheel of the vehicle starts to rotate is noted. However, with such method it will be difficult to detect the correct brake pressure as the detected pressure value will be influenced by tire friction on ground, any irregularities on the ground etc. An alternative is to put the vehicle on stands so that the wheels of the vehicle can spin freely when the brake is disengaged. However, putting a heavy vehicle on stands is easier said than done, especially when being on-site. Also, in both above methods there is the drawback that a consistent low torque needs to be asserted in order to get reliable results.

According to yet another method, mechanical indicator pins are used at each brake, indicating when the brake discs start to move from each other. However, reaching indicator pins located inside or under the machine is cumbersome. Also, instructions will be needed in case indicator pins on different wheels of the same vehicle give different results. An alternative may be to use indicator pins with a position sensor at the brake discs that signal to a control unit positioned somewhere else on the vehicle. However, then position sensors and cables that transport signals from the sensors to the control unit are needed. Such sensors and cables must be able to cope with a tough environment at the wheels.

According to yet another method, a pressure sensor is used to measure activation time, that is the time it takes to fill a compliance volume of the brakes with hydraulic fluid, e-g. oil. The activation time is then adjusted until it is compliant with a pre-determined value. However, the time it takes to fill a compliance volume with oil is sensitive to brake oil viscosity, which in turn depends on brake oil temperature. An example of such a method is disclosed in the US 2014346854 A1.

As shown above, there is a need for a method of improving calibration of a brake of a spring applied brake system. More specifically, there is a need of a method for determining the pressure that is needed to release the brakes.

### Summary of invention

It is an object of the invention to address at least some of the problems and issues outlined above. An object of embodiments of the present invention is to improve calibration of a brake of a spring applied brake system. Another object of embodiments is to detect when a brake of a spring applied brake system releases from drive means. Another object of embodiments is to detect information when a brake of a spring applied brake system releases, information such as brake pressure, and use this information when calibrating the brake function. Another object of embodiments is to detect information of a when a brake of a spring applied brake system releases in a quick, easily handled and thereby cost-efficient way. It is possible to achieve at least one of those objects by using a method, an arrangement and a mining, construction or excavation vehicle as defined in the attached independent claims.

According to one aspect, a method for calibrating a brake of a spring applied brake system is provided. The spring applied brake system comprises an electronic control unit (ECU), at least one brake arranged to operate on drive means of a vehicle, a brake valve, a pressure supply system comprising a pump, a fluid reservoir and an accumulator. The spring applied brake system further comprises conduits fluidly connecting the pressure supply system with the at least one brake via the brake valve. The method comprises charging, by means of the pump, the accumulator with fluid from the fluid reservoir. The method further comprises providing, by the ECU, a varying electrical current to the brake valve for controlling the brake valve to trigger a discharge of fluid from the accumulator through the conduits and the brake valve towards the at least one brake. The method further comprises recording pressure of the accumulator and recording the electrical current provided to the brake valve and/or brake pressure of the at least one brake. The method further comprises determining a pressure drop event in the accumulator based on the recorded accumulator pressure, and calibrating the at least one brake, wherein the electrical current provided to the brake valve recorded at the pressure drop event and/or the brake pressure of the at least one brake recorded at the pressure drop event are/is used for calibrating the at least one brake.

By detecting the event when the accumulator pressure drops, it is detected when the at least one brake releases from the drive means onto which the at least one brake is arranged to press when in a locked state. This is as the movement of the brakes from the drive means at release drains fluid from the accumulator and thereby causes a rather rapid accumulator pressure drop. The brake pressure and/or the current provided to the brake valve at the pressure drop event is then recorded and later used for the calibration of the brakes. Such a method of detecting the point of when the brakes release from the drive means, record the brake pressure at that point and/or the current provided to the brake valve at that point, and then use the recorded brake pressure and/or current at the detected time point provides a reliable and quite exact value of the brake pressure and/or current provided when the brakes start to separate from the drive means. It is important to get as exact value as possible on the brake pressure and/or brake valve current at release from the drive means as possible, because if a too high brake pressure and/or brake valve current is used at calibration, the brake will display poor linearity and reaction times because some of the fluid from the accumulator needs to be drained prior to getting discs of the brake to mate. Similarly, if a too low brake pressure and/or brake valve current is used at calibration, minimum force cannot be achieved yielding a non-linear response of the brake.

According to an embodiment, the providing of a varying electrical current to the brake valve comprises ramping the electrical current supplied to the brake valve. By ramping the electrical current, the brake pressure is gradually increased. Hereby, the brake pressure needed for releasing the brake is clearly connected to the accumulator pressure drop.

According to another embodiment, when the brake pressure recorded at the pressure drop event is used for calibrating the at least one brake, the brake pressure recorded at the pressure drop event is used for controlling the electrical current when calibrating the at least one brake.

According to another embodiment, the method further comprises displaying on a display connected to the spring applied brake system, at least one selected from the group consisting of the recorded electrical current, brake pressure and accumulator pressure. Hereby, it is possible for an operator to manually detect e.g., when the accumulator pressure drops and then also the electrical current and/or the brake pressure at the accumulator pressure drop.

According to another embodiment, the spring applied brake system further comprises a parking brake valve provided between the pressure supply system and the at least one brake in fluid connection with the pressure supply system and the at least one brake via the conduits. The method further comprises releasing the parking brake valve before the providing of a varying electrical current to the brake valve.

According to another embodiment, the determining of a pressure drop event in the accumulator based on the monitored accumulator pressure comprises detecting the pressure drop event when the accumulator pressure over time drops with a speed above a speed threshold. In other words, pressure per time unit, i.e., dp/dt, is analyzed. By comparing the accumulator pressure drop speed to a pressure drop speed threshold is a reliable way of automatically determining the accumulator pressure drop event.

According to yet another embodiment, the method is performed a plurality of times, each time recording the electrical current provided to the brake valve and/or the brake pressure of the at least one brake. The method further comprises determining a difference between a latest recorded value of the electrical current and earlier recorded values of the electrical current, and/or a difference between a latest recorded value of the brake pressure and earlier recorded values of the brake pressure, and depending on the determined difference, signaling that exchangeable brake discs of the at least one brake need to be exchanged. This method provides a reliable way of detecting wear of brake discs so that time for maintenance and possible exchange can be predicted.

According to a variant of the latest embodiment, it is signaled that the brake discs need to be exchanged when the determined difference between the latest recorded value of the brake pressure and a first-in-time recorded value of the brake pressure is above a pre-set pressure threshold and/or when the determined difference between the latest recorded value of the electrical current and a first-in-time recorded value of the electrical current is above a pre-set current threshold.

According to another aspect, an arrangement is provided for calibrating a brake of a spring applied brake system. The spring applied brake system comprises an ECU, at least one brake arranged to operate on drive means of a vehicle. a brake valve, a pressure supply system comprising a pump, a fluid reservoir, and an accumulator. The spring applied brake system further comprises conduits fluidly connecting the pressure supply system with the at least one brake via the brake valve and a first pressure sensor. The arrangement is operative for charging, by means of the pump, the accumulator with fluid from the fluid reservoir and providing, by the ECU, a varying electrical current to the brake valve for controlling the brake valve to trigger a discharge of fluid from the accumulator through the conduits and the brake valve towards the at least one brake, recording, by the first pressure sensor, pressure of the accumulator, and recording, by the ECU, the electrical current provided to the brake valve and/or brake pressure of the at least one brake. The arrangement is further operative for determining a pressure drop event in the accumulator based on the recorded accumulator pressure, and calibrating the at least one brake, wherein the electrical current provided to the brake valve recorded at the pressure drop event and/or the brake pressure of the at least one brake recorded at the pressure drop event are/is used for calibrating the at least one brake.

According to an embodiment, the arrangement is operative for the providing of a varying electrical current to the brake valve by ramping the electrical current supplied to the brake valve.

According to an embodiment, when the arrangement is operative for recording the brake pressure at the pressure drop event and operative for using the brake pressure for calibrating the at least one brake, the brake pressure recorded at the pressure drop event is used for controlling the electrical current when calibrating the at least one brake.

According to another embodiment, the arrangement is further operative for displaying on a display connected to the spring applied brake system, at least one selected from the group consisting of the recorded electrical current, the brake pressure and the accumulator pressure.

According to another embodiment, the spring applied brake system further comprises a parking brake valve provided between the pressure supply system and the at least one brake in fluid connection with the pressure supply system and the at least one brake via the conduits. Further, the arrangement is operative for releasing the parking brake valve before the providing of a varying electrical current to the brake valve.

According to another embodiment, the arrangement is operative for the determining of a pressure drop event in the accumulator (28) based on the monitored accumulator pressure by detecting the pressure drop event when the accumulator pressure over time drops with a speed above a speed threshold.

According to another aspect, a mining, construction or excavation vehicle is provided comprising drive means, a spring applied brake system which brakes are arranged to operate on the drive means and an arrangement according to any of the above embodiments.

Further possible features and benefits of this solution will become apparent from the detailed description below.

### Brief description of drawings

The invention is now described, by way of example, with reference to the accompanying drawings, in which:
Fig. 1 shows a spring applied brake system working on a wheel shaft of a vehicle, the spring applied brake system having an arrangement according to an embodiment.
Fig. 2 shows another spring applied brake system working on a wheel shaft of a vehicle, the spring applied brake system having an arrangement according to another embodiment.
Fig. 3 shows yet another spring applied brake system working on a wheel shaft of a vehicle, the spring applied brake system having an arrangement according to yet another embodiment.
Fig. 4 shows a flow chart describing methods according to embodiments of the invention.
Fig. 5 shows three diagrams describing brake pressure over time, accumulator pressure over time and current over time, respectively, according to an embodiment.

### Description of embodiments

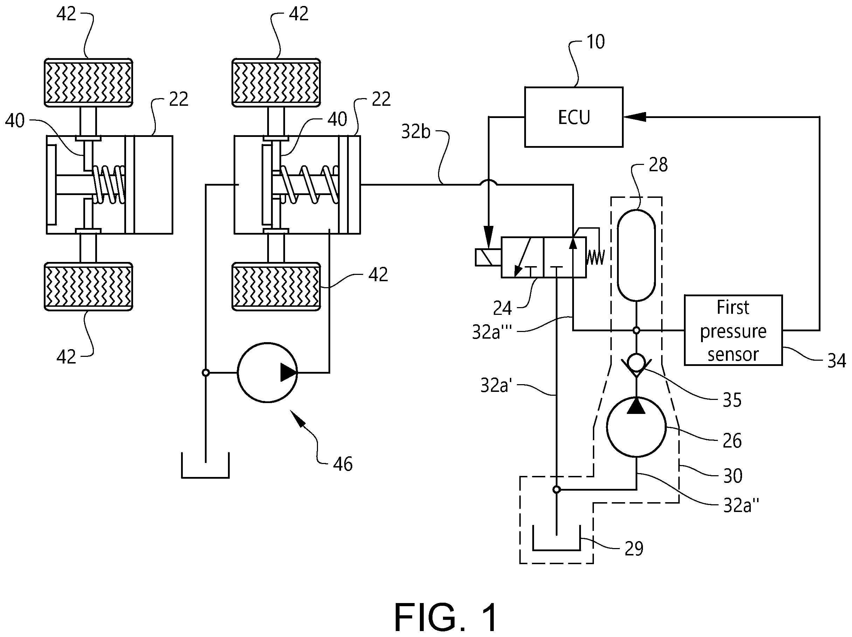

In the following, different embodiments are described of spring applied brake systems in which the present invention can be used or is incorporated in. The spring applied brake system can be a for example a Spring Applied Hydraulic Released (SAHR) brake system or a Spring Applied Pneumatic Released (SAPR) brake system. The spring applied brake system of figs. 1-3 each comprise at least one brake 22 working on drive means 40 of a vehicle. The drive means 40 of figs. 1-3 on which the at least one brake 22 work are wheel drive shafts driving wheels 42 of the vehicle. However, the brakes 22 may work on other drive means of the vehicle in which the spring applied brake system is to be installed, such as directly on the wheels. The at least one brake 22 is arranged to operate on drive means 40 of a vehicle when the spring applied brake system is installed in a vehicle. Figs. 1-3 also shows another fluidal system 46, which is a hydraulic system that supplies the brakes with cooling oil. This another fluidal system 46 is only shown for completeness.

The spring applied brake system further comprises an electronic control unit (ECU) 10, a brake valve 24 and a pressure supply system 30. The pressure supply system 30 comprises a pump 26, a fluid reservoir 29 and an accumulator 28. The spring applied brake system further comprises a first pressure supply system side conduit 32a' that connects the fluid reservoir 29 with a pressure supply system side of the brake valve 24, a second pressure supply system side conduit 32a" that connects the fluid reservoir 29 with the pump 26 and a third pressure supply system side conduit 32a‴ that connects the pump 26 with the accumulator 28, and the pump 26 and the accumulator 28 with the pressure supply system side of the brake valve 24. The first, second and third pressure supply system side conduits 32a', 32a", 32a‴ are together called pressure supply system side conduits 32 as they are connected on the pressure supply system 30 side of the brake valve 24. The spring applied brake system further comprises a brake-side conduit 32b that connects a brake side of the brake valve 24 with the at least one brake 22. Hereby, the pressure supply system side conduits 32a and the brake-side conduit 32b, together called "conduits", fluidly connect the pressure supply system 30 with the at least one brake 22 via the brake valve 24. Figs. 1-3 further each shows an optional check valve 35 arranged in the third pressure supply system side conduit 32a‴ between the accumulator 28 and the pump 26 to prevent backflow of fluid. For simplification reasons, only the fluidal connection from the brake valve 24 to one brake 22 is shown in figs. 1-3. However, it is to be understood that normally the brake valve 24 also has a fluidal connection also to any other brake of a vehicle, such as the brake 22 to the left in the figures 1-3 so that the brake valve 24 is operable also on that brake.

The ECU 10 is electrically connected to the brake valve 24, whereby the ECU 10 is able to send electrical control signals to control the function of the brake valve, i.e., open and close the brake valve.

According to embodiments of the invention, the pump 26 charges the accumulator 28 with fluid from the fluid reservoir 29. When the accumulator 28 is charged to a required level, i.e. when the accumulator has a certain wished accumulator pressure, the at least one brake 22 can be released. Observe that when starting this procedure, the at least one brake 22 is engaged to the drive means 40. In other words, the brake pressure is low, probably zero, i.e., atmospheric pressure. This release of the at least one brake 22 is performed by the ECU 10 providing a varying electrical current to the brake valve 24 so that the brake valve 24 opens. In other words, the varying electrical current controls the brake valve to trigger a discharge of fluid from the accumulator 28 through the conduits 32a, 32b and the brake valve 24 towards the at least one brake 22. According to one embodiment, the ECU 10 ramps the electrical current supplied to the brake valve 24 so that the brake valve gradually opens and lets through more and more fluid from the accumulator 28 towards the at least one brake 22. To ramp the electrical current signifies either a gradual increase or a gradual decrease of current, depending on realization of the brake valve 24. The brake valve 24 used in the embodiment shown in figs. 1-3 is shown in a position when there is no current supplied to it, which means that the brake pressure is zero, or at least close to zero and the at least one brake 22 is engaged to the drive means 40. The inclined arrow in the brake valve 24 symbolizes that in this embodiment the brake valve works proportionally, i.e., the valve opens proportional to a change of brake valve current. With increased/decreased valve current, depending on realization, the valve is "pushed" to the right in the figure so that a spring of the valve is compressed, and the brake valve 24 is gradually opened.

The spring applied brake system further comprises a first pressure sensor 34 that is arranged to detect pressure of the accumulator 28. For this reason, the first pressure sensor 34 is connected to the accumulator 28 or at any other position in the system where the accumulator pressure is easily and correctly detected, such as at the pressure supply system side of the brake valve 24 where the third pressure supply system side conduit 32a‴ is connected. The first pressure sensor 34 is communicatively connected, e.g., electrically connected to the ECU 10. The pressure levels detected by the first pressure sensor 34 are fed to the ECU 10 via this communicative connection. The first pressure sensor 34 measures the accumulator pressure over time and sends the measured accumulator pressure values to the ECU 10. The ECU 10 records the measured accumulator pressure values, preferably in measurement time order.

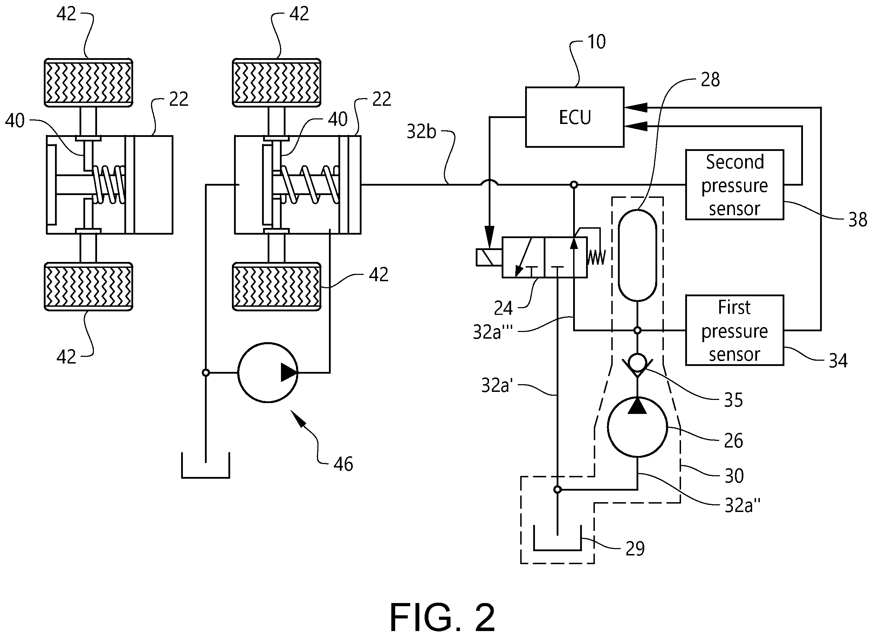

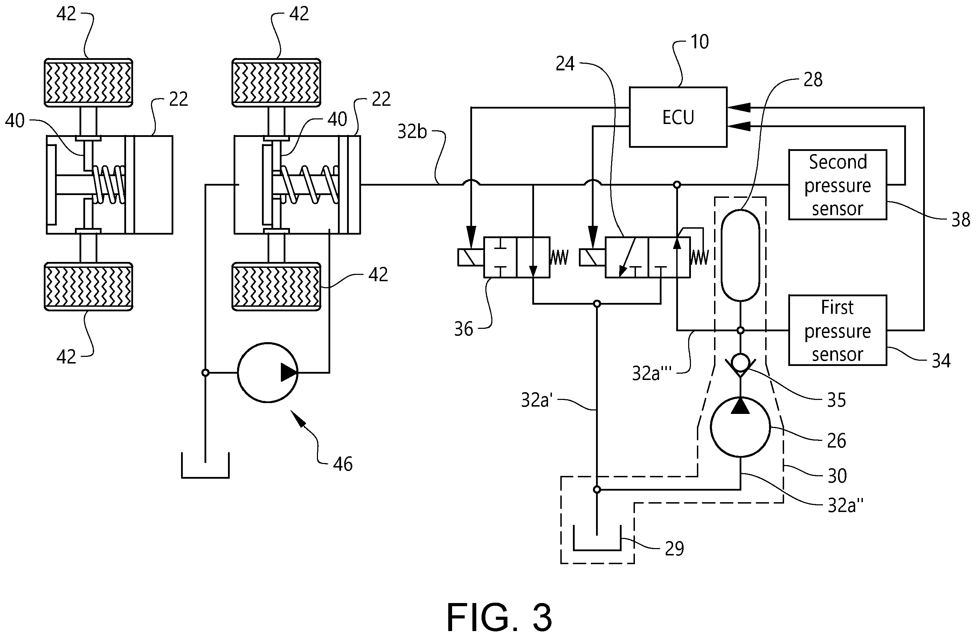

According to a first alternative, the ECU 10 records over time, values of the electrical current that it provides to the brake valve 24 for controlling the brake valve 24 to trigger a discharge of fluid towards the at least one brake 22. The ECU 10 records the electrical current values preferably in recording time order. According to a second alternative, the spring applied brake system further comprises a second pressure sensor 38 (see fig. 2 and 3) that measures pressure of at least one of the at least one brake 22. The second pressure sensor 38 is then connected at the brake side of the brake valve 24, i.e. in the brake-side conduit 32b. The second pressure sensor 38 is communicatively connected, e.g., electrically connected to the ECU 10. The pressure levels detected by the second pressure sensor 38 are fed to the ECU 10 via this communicative connection. The second pressure sensor 38 measures the brake pressure over time and sends the measured brake pressure values to the ECU 10. The ECU 10 records the brake pressure values preferably in measurement time order. Either the first alternative or the second alternative is used. However, it may also be possible that both the first and the second alternative are used.

The ECU 10 provides the varying control current to the brake valve 24 and records the accumulator pressure as well as the control current and/or the brake pressure during the provision of the control current. As fluid flows into the conduit 32b, the brake pressure increases. When the brake pressure is high enough, the at least one brake 22 releases from the drive means 40. The release of the at least one brake 22, i.e., the movement of the brake, results in a pressure drop in the accumulator 28. As the accumulator pressure is recorded, such a pressure drop event can and will be registered or determined by the ECU 10, from analysis of the accumulator pressure level. The electrical current provided to the brake valve at the time of registering of the pressure drop event and/or the brake pressure at the time of registering of the pressure drop event is then registered. Those values are then a contact, aka calibration, current or pressure and will be used for the calibration of the at least one brake 22. Hereby, a quick and reliable calibration process is achieved that results in a reliable brake response for the operator and controllability for automation purposes.

According to an embodiment, the pressure drop is determined manually, by an operator. In order to make it possible for the operator to determine the pressure drop, the accumulator pressure over time is presented to the operator, such as displayed on an operator screen or other Man Machine Interface connected or connectable to the spring applied brake system.

In figs. 1-3 like numerals refer to the same function. Fig. 2 differs from fig. 1 in that the second pressure sensor 38 that measures brake pressure is existent in fig. 2 but not in fig. 1. The embodiment shown in fig. 3 also has a brake pressure sensor 38. However, the brake pressure sensor 38 is optional in this embodiment. The embodiment of fig. 3 differs from the embodiments in fig. 1 and fig. 2 by having a parking brake valve 36, in addition to the brake valve 24, so the main purpose of the embodiment of fig. 3 is to show how embodiments of the present invention works together with such a parking brake valve 36. The parking brake valve 36 is connected in between the pressure supply system 30 and the at least one brake 22 in a similar way as the brake valve 24. When there is a parking brake valve 36, the brake valve 24 may be called service brake valve 24 to more easily distinct it from the parking brake valve 36. The parking brake valve 36 is connected in parallel with the service brake valve 24. The ECU 10 is communicatively (electrically) connected to the parking brake valve 36. When the parking brake valve 36 is on, that is, is used for keeping the vehicle standing still, there is a direct connection from the at least one brake 22 via the parking brake valve 36 to the fluid reservoir 29, which means there is per definition low brake pressure at the at least one brake 22 and the at least one brake 22 is thereby engaged to the drive means 40. In this embodiment, the parking brake valve 36 needs to be released before the varying electrical current is provided to the brake valve 24. "Releasing the parking brake valve 36" may signify to switch off the connection between the pressure supply system 30 and the at least one brake 22 through the parking brake valve. The switching off of this connection is performed by a control signal being sent from the ECU 10 to the parking brake valve 36, which could be seen as pushing the valve 36 to the right in fig. 3. When the parking brake valve 36 has been released, there is still low brake pressure, but now it is possible to increase the brake pressure by opening the service brake valve 24, as described earlier.

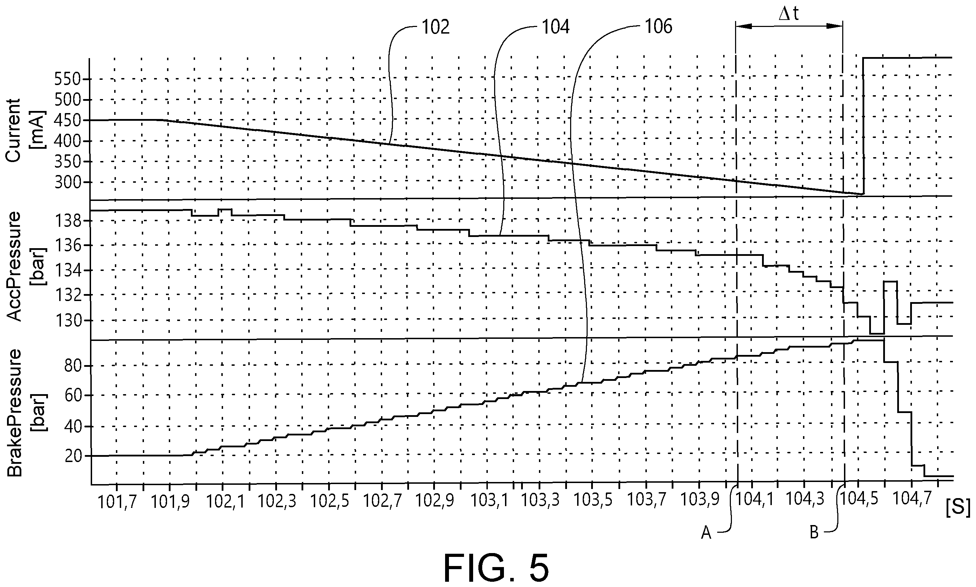

Fig. 5 illustrates an example of how electrical current 102 supplied to the brake valve 24, accumulator pressure 104 and brake pressure 106 varies over time when using an embodiment of the invention in which the accumulator pressure drop event is determined when the accumulator pressure over time drops with a speed above a speed threshold. In other words, when it is determined that the accumulator pressure falls faster than with a certain pressure change per time unit, a pressure drop event is detected.

In this embodiment, the current 102 supplied to the brake valve is ramped, thereby gradually opening the brake valve. In this example, a ramp as a gradual decrease of current provides a gradual opening of the brake valve, however, with a different realization it might as well have been the opposite, i.e. a gradual increase of current provides a gradual opening of the brake valve. In a first phase of the ramping of the current, the accumulator pressure slowly decreases, and the brake pressure increases. When passing time point A, the accumulator pressure 104 starts to decrease more rapidly. The pressure drop event is determined for a measurement time period Δt. That is, the accumulator pressure drop over time that is used for comparing to the speed threshold is taken over a certain measurement time period. The speed threshold is set as a value of dp/dt, in other words, the change of pressure over a time period. In the example of fig. 5, the accumulator pressure change over the time period Δt is determined repetitively, optionally continuously, over the time when current is supplied to the brake valve 24, or determined with a defined time interval. When reaching time point B, the dp/dt over the time period Δt between time point A and B has become higher than the speed threshold and so the accumulator pressure drop event is determined by the ECU 10. The ECU 10 then reads from the recorded brake pressure and/or electrical current supplied to the brake valve, which the brake pressure value and/or the current value was at the pressure drop event. According to one embodiment, it is the value recorded at the start of the measurement period that is used, i.e. the value at time point A. In case the electrical current is used for the calibration, it is the electrical current recorded at time point A that is used for the calibration. In case the brake pressure is used for the calibration, it is the brake pressure recorded at time point A that is used for the calibration. In other embodiments, it may be the electrical current and/or brake pressure recorded at the middle of the measurement time period Δt that is used.

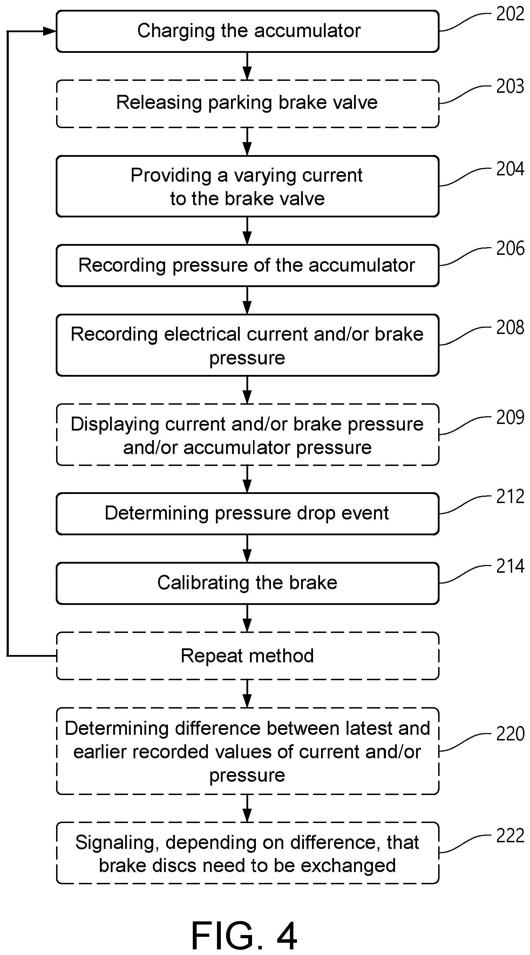

Fig. 4, in conjunction with any of figs. 1-3, describes a method for calibrating a brake of a spring applied brake system. The spring applied brake system comprises an ECU 10, at least one brake 22 arranged to operate on drive means of a vehicle, a brake valve 24, a pressure supply system 30 comprising a pump 26, a fluid reservoir 29 and an accumulator 28, and conduits 32a, 32b fluidly connecting the pressure supply system 30 with the at least one brake 22 via the brake valve 24. The method comprises charging 202, by means of the pump 26, the accumulator 28 with fluid from the fluid reservoir 29 and providing 204, by the ECU 10, a varying electrical current to the brake valve 24 for controlling the brake valve to trigger a discharge of fluid from the accumulator 28 through the conduits 32a, 32b and the brake valve 24 towards the at least one brake 22. The method further comprises recording 206 accumulator 28 pressure, recording 208 the electrical current provided to the brake valve 24 and/or brake pressure of the at least one brake 22, determining 212 a pressure drop event in the accumulator based on the recorded accumulator pressure, and calibrating 214 the at least one brake 22, wherein the electrical current provided to the brake valve 24 recorded at the pressure drop event and/or the brake pressure of the at least one brake 22 recorded at the pressure drop event are/is used for calibrating the at least one brake.

According to an embodiment, the method further comprises displaying 209 on a display connected to the spring applied brake system, at least one selected from the group consisting of the electrical current, the brake pressure and the accumulator pressure.

According to another embodiment, in which the spring applied brake system further comprises a parking brake valve 36, the method further comprises releasing 203 the parking brake valve 36 before the providing 204 of a varying electrical current to the brake valve 24.

According to another embodiment, the method is performed a plurality of times, each time recording the electrical current provided to the brake valve 24 and/or the brake pressure of the at least one brake 22. The method further comprises determining 220 a difference between a latest recorded value of the electrical current and earlier recorded values of the electrical current, and/or a difference between a latest recorded value of the brake pressure and earlier recorded values of the brake pressure, and depending on the determined difference, signaling 222 that exchangeable brake discs of the at least one brake 22 need to be exchanged. That the method is performed a plurality of times is to be interpreted as a plurality of times with a considerable time in between two adjacent times, as the reason here is to determine wear of the brake discs. It may however be possible to perform the method a couple of times in a row at the same occasion or day in order to get a reliable result. But the latest recorded value and the one or more earlier recorded values used for determining the difference are recorded with a considerable time in between, at least a couple of weeks, in order to be able to determine any considerable difference.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or Moreover, it is not necessary for an apparatus or method to address each and every problem sought to be solved by the presently described concept, for it to be encompassed hereby. In the figures, a broken line generally signifies that the feature within the broken line is optional.

## Claims

1. A method for calibrating a brake of a spring applied brake system, the spring applied brake system comprising:
an electronic control unit, ECU, (10);
at least one brake (22) arranged to operate on drive means of a vehicle;
a brake valve (24)
a pressure supply system (30) comprising a pump (26), a fluid reservoir (29) and an accumulator (28);
conduits (32a, 32b) fluidly connecting the pressure supply system (30) with the at least one brake (22) via the brake valve (24),
the method comprising:
charging (202), by means of the pump (26), the accumulator (28) with fluid from the fluid reservoir (29);
providing (204), by the ECU (10), a varying electrical current to the brake valve (24) for controlling the brake valve to trigger a discharge of fluid from the accumulator (28) through the conduits (32a, 32b) and the brake valve (24) towards the at least one brake (22);
recording (206) pressure of the accumulator (28);
recording (208) the electrical current provided to the brake valve (24) and/or brake pressure of the at least one brake (22);
determining (212) a pressure drop event in the accumulator based on the recorded accumulator pressure, and **characterized in that** it further comprises:
calibrating (214) the at least one brake (22), wherein the electrical current provided to the brake valve (24) recorded at the pressure drop event and/or the brake pressure of the at least one brake (22) recorded at the pressure drop event are/is used for calibrating the at least one brake.

2. Method according to claim 1, wherein the providing (204) of a varying electrical current to the brake valve (24) comprises ramping the electrical current supplied to the brake valve.

3. Method according to claim 1 or 2, wherein, when the brake pressure recorded (208) at the pressure drop event is used for calibrating the at least one brake, the brake pressure recorded at the pressure drop event is used for controlling the electrical current when calibrating the at least one brake.

4. Method according to any of the preceding claims, further comprising:
displaying (209) on a display connected to the spring applied brake system, at least one selected from the group consisting of the electrical current, the brake pressure and the accumulator pressure.

5. Method according to any of the preceding claims, wherein the spring applied brake system further comprises a parking brake valve (36) provided between the pressure supply system (30) and the at least one brake (22) in fluid connection with the pressure supply system and the at least one brake via the conduits (32a, 32b), the method comprises:
releasing (203) the parking brake valve (36) before the providing (204) of a varying electrical current to the brake valve (24).

6. Method according to any of the preceding claims, wherein the determining (212) of a pressure drop event in the accumulator (28) based on the monitored accumulator pressure comprises detecting the pressure drop event when the accumulator pressure over time drops with a speed above a speed threshold.

7. Method according to any of the preceding claims, wherein the method is performed a plurality of times, each time recording the electrical current provided to the brake valve (24) and/or the brake pressure of the at least one brake (22), the method further comprises:
determining (220) a difference between a latest recorded value of the electrical current and earlier recorded values of the electrical current, and/or a difference between a latest recorded value of the brake pressure and earlier recorded values of the brake pressure, and
depending on the determined difference, signaling (222) that exchangeable brake discs of the at least one brake (22) need to be exchanged.

8. Method according to claim 7, wherein it is signaled (222) that the brake discs need to be exchanged when the determined (220) difference between the latest recorded value of the brake pressure and a first-in-time recorded value of the brake pressure is above a pre-set pressure threshold and/or when the determined (220) difference between the latest recorded value of the electrical current and a first-in-time recorded value of the electrical current is above a pre-set current threshold.

9. Arrangement for calibrating a brake of a spring applied brake system, the spring applied brake system comprising:
an electronic control unit, ECU (10);
at least one brake (22) arranged to operate on drive means of a vehicle;
a brake valve (24)
a pressure supply system (30) comprising a pump (26), a fluid reservoir (29) and an accumulator (28);
conduits (32a, 32b) fluidly connecting the pressure supply system (30) with the at least one brake (22) via the brake valve (24),
a first pressure sensor (34),
the arrangement being operative for:
charging, by means of the pump (26), the accumulator (28) with fluid from the fluid reservoir (29);
providing, by the ECU (10), a varying electrical current to the brake valve (24) for controlling the brake valve to trigger a discharge of fluid from the accumulator (28) through the conduits (32a, 32b) and the brake valve (24) towards the at least one brake (22);
recording, by the first pressure sensor (34), pressure of the accumulator (28);
recording, by the ECU (10), the electrical current provided to the brake valve (24) and/or brake pressure of the at least one brake (22);
determining a pressure drop event in the accumulator based on the recorded accumulator pressure, and **characterized in that** it further comprises:
calibrating the at least one brake (22), wherein the electrical current provided to the brake valve (24) recorded at the pressure drop event and/or the brake pressure of the at least one brake (22) recorded at the pressure drop event are/is used for calibrating the at least one brake.

10. Arrangement according to claim 9, wherein the arrangement is operative for the providing of a varying electrical current to the brake valve by ramping the electrical current supplied to the brake valve.

11. Arrangement according to claim 9 or 10, wherein when the arrangement is operative for recording the brake pressure at the pressure drop event and operative for using the brake pressure for calibrating the at least one brake, the brake pressure recorded at the pressure drop event is used for controlling the electrical current when calibrating the at least one brake.

12. Arrangement according to any of claims 9-11, further being operative for displaying on a display connected to the spring applied brake system, at least one selected from the group consisting of the recorded electrical current, the brake pressure and the accumulator pressure.

13. Arrangement according to any of claims 9-12, wherein the spring applied brake system further comprises a parking brake valve (36) provided between the pressure supply system (30) and the at least one brake (22) in fluid connection with the pressure supply system and the at least one brake via the conduits (32a, 32b), the arrangement further being operative for:
releasing the parking brake valve (36) before the providing of a varying electrical current to the brake valve (24).

14. Arrangement according to any of claims 9-13, wherein the arrangement is operative for the determining of a pressure drop event in the accumulator (28) based on the monitored accumulator pressure by detecting the pressure drop event when the accumulator pressure over time drops with a speed above a speed threshold.

15. A mining, construction or excavation vehicle comprising:
drive means (40),
a spring applied brake system which brakes are arranged to operate on the drive means (40) and,
an arrangement according to any of claims 9-14.

## Patentansprüche

1. Verfahren zum Kalibrieren einer Bremse einer Federspeicherbremsanlage, die Federspeicherbremsanlage umfassend:
eine elektronische Steuereinheit, ECU, (10);
mindestens eine Bremse (22), die angeordnet ist, um Antriebsmittel eines Fahrzeugs zu betreiben;
ein Bremsventil (24)
ein Druckzufuhrsystem (30), umfassend eine Pumpe (26), einen Fluidbehälter (29) und einen Akkumulator (28);
Leitungen (32a, 32b), die das Druckzufuhrsystem (30) über das Bremsventil (24) mit der mindestens einen Bremse (22) fluidisch verbinden,
das Verfahren umfassend:
Laden (202) des Akkumulators (28) mit Fluid aus dem Fluidbehälter (29) mittels der Pumpe (26);
Bereitstellen (204) eines variierenden elektrischen Stroms an das Bremsventil (24) durch die ECU (10), um das Bremsventil zu steuern, um ein Entladen von Fluid aus dem Akkumulator (28) durch die Leitungen (32a, 32b) und das Bremsventil (24) in Richtung zu der mindestens einen Bremse (22) auszulösen;
Aufzeichnen (206) des Drucks des Akkumulators (28);
Aufzeichnen (208) des elektrischen Stroms, der dem Bremsventil (24) bereitgestellt wird, und/oder des Bremsdrucks der mindestens eine Bremse (22);
Bestimmen (212) eines Druckabfallereignisses im Akkumulator basierend auf dem aufgezeichneten Akkumulatordruck, und **dadurch gekennzeichnet, dass** es weiter umfasst:
Kalibrieren (214) der mindestens einen Bremse (22), wobei der dem Bremsventil (24) bereitgestellte elektrische Strom, der beim Druckabfallereignis aufgezeichnet wurde, und/oder der Bremsdruck der mindestens einen Bremse (22), der beim Druckabfallereignis aufgezeichnet wurde, zum Kalibrieren der mindestens einen Bremse verwendet werden/wird.

2. Verfahren nach Anspruch 1, wobei das Bereitstellen (204) eines variierenden elektrischen Stroms an das Bremsventil (24) ein Steigern des dem Bremsventil zugeführten elektrischen Stroms umfasst.

3. Verfahren nach Anspruch 1 oder 2, wobei, wenn der beim Druckabfallereignis aufgezeichnete Bremsdruck (208) zum Kalibrieren der mindestens einen Bremse verwendet wird, der beim Druckabfallereignis aufgezeichnete Bremsdruck zum Steuern des elektrischen Stroms beim Kalibrieren der mindestens einen Bremse verwendet wird.

4. Verfahren nach einem der vorstehenden Ansprüche, weiter umfassend:
Anzeigen (209) auf einer mit der Federspeicherbremsanlage verbundenen Anzeige mindestens eines, ausgewählt aus der Gruppe, bestehend aus dem elektrischen Strom, dem Bremsdruck und dem Akkumulatordruck.

5. Verfahren nach einem der vorstehenden Ansprüche, wobei die Federspeicherbremsanlage weiter ein Feststellbremsventil (36) umfasst, das zwischen dem Druckzufuhrsystem (30) und der mindestens einen Bremse (22) in Fluidverbindung mit dem Druckzufuhrsystem und der mindestens einen Bremse über die Leitungen (32a, 32b) bereitgestellt ist, wobei das Verfahren umfasst:
Freigeben (203) des Feststellbremsventils (36) vor dem Bereitstellen (204) eines variierenden elektrischen Stroms an das Bremsventil (24).

6. Verfahren nach einem der vorstehenden Ansprüche, wobei das Bestimmen (212) eines Druckabfallereignisses im Akkumulator (28) basierend auf dem überwachten Akkumulatordruck ein Erfassen des Druckabfallereignisses umfasst, wenn der Akkumulatordruck mit einer Geschwindigkeit über einem Geschwindigkeitsschwellenwert im Laufe der Zeit abfällt.

7. Verfahren nach einem der vorstehenden Ansprüche, wobei das Verfahren eine Vielzahl von Malen durchgeführt wird, wobei jedes Mal der dem Bremsventil (24) bereitgestellte elektrische Strom und/oder der Bremsdruck der mindestens einen Bremse (22) aufgezeichnet wird, wobei das Verfahren weiter umfasst:
Bestimmen (220) einer Differenz zwischen einem zuletzt aufgezeichneten Wert des elektrischen Stroms und zuvor aufgezeichneten Werten des elektrischen Stroms und/oder einer Differenz zwischen einem zuletzt aufgezeichneten Wert des Bremsdrucks und zuvor aufgezeichneten Werten des Bremsdrucks, und
in Abhängigkeit von der bestimmten Differenz, Signalisieren (222), dass austauschbare Bremsscheiben der mindestens einen Bremse (22) ausgetauscht werden müssen.

8. Verfahren nach Anspruch 7, wobei signalisiert wird (222), dass die Bremsscheiben ausgetauscht werden müssen, wenn die bestimmte (220) Differenz zwischen dem zuletzt aufgezeichneten Wert des Bremsdrucks und einem zeitlich zuerst aufgezeichneten Wert des Bremsdrucks über einem voreingestellten Druckschwellenwert liegt und/oder wenn die bestimmte (220) Differenz zwischen dem zuletzt aufgezeichneten Wert des elektrischen Stroms und einem zeitlich zuerst aufgezeichneten Wert des elektrischen Stroms über einem voreingestellten Stromschwellenwert liegt.

9. Anordnung zum Kalibrieren einer Bremse einer Federspeicherbremsanlage, die Federspeicherbremsanlage umfassend:
eine elektronische Steuereinheit, ECU, (10);
mindestens eine Bremse (22), die angeordnet ist, um Antriebsmittel eines Fahrzeugs zu betreiben;
ein Bremsventil (24)
ein Druckzufuhrsystem (30), umfassend eine Pumpe (26), einen Fluidbehälter (29) und einen Akkumulator (28);
Leitungen (32a, 32b), die das Druckzufuhrsystem (30) über das Bremsventil (24) mit der mindestens einen Bremse (22) fluidisch verbinden,
einen ersten Drucksensor (34),
wobei die Anordnung betreibbar ist zum:
Laden des Akkumulators (28) mit Fluid aus dem Fluidbehälter (29) mittels der Pumpe (26);
Bereitstellen eines variierenden elektrischen Stroms an das Bremsventil (24) durch die ECU (10), um das Bremsventil zu steuern, um ein Entladen von Fluid aus dem Akkumulator (28) durch die Leitungen (32a, 32b) und das Bremsventil (24) in Richtung zu der mindestens einen Bremse (22) auszulösen;
Aufzeichnen des Drucks des Akkumulators (28) durch den ersten Drucksensor (34);
Aufzeichnen des elektrischen Stroms, der dem Bremsventil (24) bereitgestellt wird, und/oder des Bremsdrucks der mindestens eine Bremse (22) durch die ECU (10);
Bestimmen eines Druckabfallereignisses im Akkumulator basierend auf dem aufgezeichneten Akkumulatordruck, und **dadurch gekennzeichnet, dass** es weiter umfasst:
Kalibrieren der mindestens einen Bremse (22), wobei der dem Bremsventil (24) bereitgestellte elektrische Strom, der beim Druckabfallereignis aufgezeichnet wurde, und/oder der Bremsdruck der mindestens einen Bremse (22), der beim Druckabfallereignis aufgezeichnet wurde, zum Kalibrieren der mindestens einen Bremse verwendet werden/wird.

10. Anordnung nach Anspruch 9, wobei die Anordnung betreibbar ist zum Bereitstellen eines variierenden elektrischen Stroms an das Bremsventil durch Steigern des dem Bremsventil zugeführten elektrischen Stroms.

11. Anordnung nach Anspruch 9 oder 10, wobei, wenn die Anordnung zum Aufzeichnen des Bremsdrucks beim Druckabfallereignis betreibbar ist und zum Verwenden des Bremsdrucks zum Kalibrieren der mindestens einen Bremse betreibbar ist, der beim Druckabfallereignis aufgezeichnete Bremsdruck zum Steuern des elektrischen Stroms beim Kalibrieren der mindestens einen Bremse verwendet wird.

12. Anordnung nach einem der Ansprüche 9-11, die weiter zum Anzeigen auf einer mit der Federspeicherbremsanlage verbundenen Anzeige mindestens eines, ausgewählt aus der Gruppe, bestehend aus dem aufgezeichneten elektrischen Strom, dem Bremsdruck und dem Akkumulatordruck betreibbar ist.

13. Anordnung nach einem der Ansprüche 9-12, wobei die Federspeicherbremsanlage weiter ein Feststellbremsventil (36) umfasst, das zwischen dem Druckzufuhrsystem (30) und der mindestens einen Bremse (22) in Fluidverbindung mit dem Druckzufuhrsystem und der mindestens einen Bremse über die Leitungen (32a, 32b) bereitgestellt ist, wobei die Anordnung weiter betreibbar ist zum:
Freigeben des Feststellbremsventils (36) vor dem Bereitstellen eines variierenden elektrischen Stroms an das Bremsventil (24).

14. Anordnung nach einem der Ansprüche 9-13, wobei die Anordnung zum Bestimmen eines Druckabfallereignisses im Akkumulator (28) basierend auf dem überwachten Akkumulatordruck durch Erfassen des Druckabfallereignisses, wenn der Akkumulatordruck mit einer Geschwindigkeit über einem Geschwindigkeitsschwellenwert im Laufe der Zeit abfällt, betreibbar ist.

15. Bergbau-, Bau- oder Aushubfahrzeug, umfassend:
Antriebsmittel (40),
eine Federspeicherbremsanlage, dessen Bremsen angeordnet sind, um die Antriebsmittel (40) zu betreiben, und
eine Anordnung nach einem der Ansprüche 9-14.

## Revendications

1. Procédé d'étalonnage d'un frein d'un système de frein appliqué à ressort, le système de frein appliqué à ressort comprenant :
une unité de commande électronique, ECU, (10) ;
au moins un frein (22) conçu pour fonctionner sur un moyen d'entraînement d'un véhicule ;
un clapet (24) de frein
un système d'alimentation en pression (30) comprenant une pompe (26), un réservoir (29) de fluide et un accumulateur (28) ;
des conduits (32a, 32b) raccordement fluidiquement le système d'alimentation en pression (30) au au moins un frein (22) via le clapet (24) de frein,
le procédé comprenant :
la charge (202), au moyen de la pompe (26), de l'accumulateur (28) avec un fluide provenant du réservoir (29) de fluide ;
la fourniture (204), par l'ECU (10), d'un courant électrique variable au clapet (24) de frein pour commander le clapet de frein afin de déclencher une décharge de fluide depuis l'accumulateur (28) à travers les conduits (32a, 32b) et le clapet (24) de frein vers le au moins un frein (22) ;
l'enregistrement (206) d'une pression de l'accumulateur (28) ;
l'enregistrement (208) du courant électrique fourni au clapet (24) de frein et/ou de la pression de frein du au moins un frein (22) ;
la détermination (212) d'un événement de chute de pression dans l'accumulateur sur la base de la pression d'accumulateur enregistrée, et **caractérisé en ce qu'**il comprend en outre :
l'étalonnage (214) du au moins un frein (22), dans lequel le courant électrique fourni au clapet (24) de frein enregistré lors de l'événement de chute de pression et/ou la pression de frein du au moins un frein (22) enregistrée lors de l'événement de chute de pression sont utilisés pour étalonner le au moins un frein.

2. Procédé selon la revendication 1, dans lequel la fourniture (204) d'un courant électrique variable au clapet (24) de frein comprend l'accélération du courant électrique apporté au clapet de frein.

3. Procédé selon la revendication 1 ou revendication 2, dans lequel, lorsque la pression de frein enregistrée (208) lors de l'événement de chute de pression est utilisée pour étalonner le au moins un frein, la pression de frein enregistrée lors de l'événement de chute de pression est utilisée pour commander le courant électrique lors de l'étalonnage du au moins un frein.

4. Procédé selon l'une quelconque des revendications précédentes, comprenant en outre :
l'affichage (209) sur un afficheur connecté au système de frein appliqué à ressort, d'au moins une caractéristique sélectionnée dans le groupe consistant en le courant électrique, la pression de frein et la pression d'accumulateur.

5. Procédé selon l'une quelconque des revendications précédentes, dans lequel le système de frein appliqué à ressort comprend en outre un clapet (36) de frein à main situé entre le système d'alimentation en pression (30) et le au moins un frein (22) en raccordement fluidique avec le système d'alimentation en pression et le au moins un frein via les conduits (32a, 32b), le procédé comprenant :
le relâchement (203) du clapet (36) de frein à main avant la fourniture (204) d'un courant électrique variable au clapet (24) de frein.

6. Procédé selon l'une quelconque des revendications précédentes, dans lequel la détermination (212) d'un événement de chute de pression dans l'accumulateur (28) sur la base de la pression d'accumulateur surveillée comprend la détection de l'événement de chute de pression lorsque la pression d'accumulateur au fil du temps chute avec une vitesse au-dessus d'un seuil de vitesse.

7. Procédé selon l'une quelconque des revendications précédentes, dans lequel le procédé est mis en œuvre une pluralité de fois, chaque fois enregistrant le courant électrique fourni au clapet (24) de frein et/ou la pression de frein du au moins un frein (22), le procédé comprenant en outre :
la détermination (220) d'une différence entre une valeur enregistrée la plus récente du courant électrique et des valeurs enregistrées plus anciennes du courant électrique, et/ou d'une différence entre une valeur enregistrée la plus récente de la pression de frein et des valeurs enregistrées plus anciennes de la pression de frein, et
en fonction de la différence déterminée, le fait de signaler (222) que des disques de frein remplaçables du au moins un frein (22) ont besoin d'être remplacés.

8. Procédé selon la revendication 7, dans lequel il est signalé (222) que les disques de frein ont besoin d'être remplacés lorsque la différence déterminée (220) entre la valeur enregistrée la plus récente de la pression de frein et une valeur enregistrée en premier de la pression de frein est au-dessus d'un seuil de pression prédéfini et/ou lorsque la différence déterminée (220) entre la valeur enregistrée la plus récente du courant électrique et une valeur enregistrée en premier du courant électrique est au-dessus d'un seuil de courant prédéfini.

9. Agencement d'étalonnage d'un frein d'un système de frein appliqué à ressort, le système de frein appliqué à ressort comprenant :
une unité de commande électronique, ECU (10) ;
au moins un frein (22) conçu pour fonctionner sur un moyen d'entraînement d'un véhicule ;
un clapet (24) de frein
un système d'alimentation en pression (30) comprenant une pompe (26), un réservoir (29) de fluide et un accumulateur (28) ;
des conduits (32a, 32b) raccordement fluidiquement le système d'alimentation en pression (30) au au moins un frein (22) via le clapet (24) de frein,
un premier capteur de pression (34),
l'agencement servant à :
charger, au moyen de la pompe (26), l'accumulateur (28) avec un fluide provenant du réservoir (29) de fluide ;
fournir, par l'ECU (10), un courant électrique variable au clapet (24) de frein pour commander le clapet de frein afin de déclencher une décharge de fluide depuis l'accumulateur (28) à travers les conduits (32a, 32b) et le clapet (24) de frein vers le au moins un frein (22) ;
enregistrer, par le premier capteur de pression (34), la pression de l'accumulateur (28) ;
enregistrer, par l'ECU (10), le courant électrique fourni au clapet (24) de frein et/ou la pression de frein du au moins un frein (22) ;
déterminer un événement de chute de pression dans l'accumulateur sur la base de la pression d'accumulateur enregistrée, et **caractérisé en ce qu'**il comprend en outre :
l'étalonnage du au moins un frein (22), dans lequel le courant électrique fourni au clapet (24) de frein enregistré lors de l'événement de chute de pression et/ou la pression de frein du au moins un frein (22) enregistrée lors de l'événement de chute de pression sont utilisés pour étalonner le au moins un frein.

10. Agencement selon la revendication 9, dans lequel l'agencement sert à la fourniture d'un courant électrique variable au clapet de frein par l'accélération du courant électrique apporté au clapet de frein.

11. Agencement selon la revendication 9 ou revendication 10, dans lequel, lorsque l'agencement sert à enregistrer la pression de frein lors de l'événement de chute de pression et sert à utiliser la pression de frein pour étalonner le au moins un frein, la pression de frein enregistrée lors de l'événement de chute de pression est utilisée pour commander le courant électrique lors de l'étalonnage du au moins un frein.

12. Agencement selon l'une quelconque des revendications 9 à 11, servant en outre à afficher sur un afficheur connecté au système de frein appliqué à ressort, au moins une caractéristique sélectionnée dans le groupe consistant en le courant électrique enregistré, la pression de frein et la pression d'accumulateur.

13. Agencement selon l'une quelconque des revendications 9 à 12, dans lequel le système de frein appliqué à ressort comprend en outre un clapet (36) de frein à main situé entre le système d'alimentation en pression (30) et le au moins un frein (22) en raccordement fluidique avec le système d'alimentation en pression et le au moins un frein via les conduits (32a, 32b), l'agencement servant en outre à :
relâcher le clapet (36) de frein à main avant la fourniture d'un courant électrique variable au clapet (24) de frein.

14. Agencement selon l'une quelconque des revendications 9 à 13, dans lequel l'agencement sert à la détermination d'un événement de chute de pression dans l'accumulateur (28) sur la base de la pression d'accumulateur surveillée en détectant l'événement de chute de pression lorsque la pression d'accumulateur au fil du temps chute avec une vitesse au-dessus d'un seuil de vitesse.

15. Véhicule d'exploitation minière, de construction ou d'excavation comprenant :
un moyen d'entraînement (40).
un système de frein appliqué à frein dont les freins sont conçus pour fonctionner sur le moyen d'entraînement (40) et,
un agencement selon l'une quelconque des revendications 9 à 14,
